# EUROPÄISCHE PATENTSCHRIFT

(11) **EP 2 403 739 B1**
(45) Veröffentlichungstag und Bekanntmachung des Hinweises auf die Patenterteilung: **07.08.2013**
(21) Anmeldenummer: 10707213.4
(22) Anmeldetag: 26.02.2010
(51) Int. Cl.: B60R 25/04, B60K 28/06

(54) **FAHRBERECHTIGUNGSSYSTEM FÜR EINEN ELEKTROANTRIEB**
DRIVE AUTHORIZATION SYSTEM FOR AN ELECTRIC DRIVE
SYSTÈME D'AUTORISATION DE CONDUITE POUR UN ENTRAÎNEMENT ÉLECTRIQUE

(30) Priorität: 07.03.2009 DE 102009012221
(43) Veröffentlichungstag der Anmeldung: 11.01.2012
(73) Patentinhaber: Daimler AG, 70327 Stuttgart (DE)
(72) Erfinder: KRÜGER, Andreas, 71134 Aidlingen (DE); SUBILEAU, Sylvain, 72800 Eningen (DE); VON HASSELN, Hermann, 70794 Filderstadt (DE)
(74) Vertreter: JENSEN & SON
(86) Internationale Anmeldenummer: PCT/EP2010/001189
(87) Internationale Veröffentlichungsnummer: WO 2010/102728

(56) Entgegenhaltungen:
- DE-A1- 4 336 212
- DE-A1-102005 039 585

## Beschreibung

Die Erfindung betrifft ein Fahrberechtigungssystem für einen Elektroantrieb nach dem Oberbegriff des Patentanspruchs 1.

Bei herkömmlichen Fahrberechtigungssystemen besteht die Möglichkeit durch Austausch von Komponenten, z.B. von am Fahrberechtigungssystem beteiligten Steuergeräten, eine elektronische Wegfahrsperrfunktion zu umgehen. Daher kann zur Erhöhung der Sicherheit eine elektronische Wegfahrsperrfunktion mechatronisch an eine schwer zugängliche Sensorik bzw. Aktuatorik am Verbrennungsmotor gekoppelt werden.

In der Patentschrift DE 43 36 212 C2 wird eine Geberanordnung zur Zylindererkennung bei einer Brennkraftmaschine beschrieben. Die beschriebene Geberanordnung umfasst zur Erkennung einer definierten Stellung einer Kurbelwelle einer Brennkraftmaschine eine Geberscheibe, eine auf der Geberscheibe angeordnete Bezugsmarke, einen der Geberscheibe zugeordneten Aufnehmer und eine das Signal des Aufnehmers auswertende Steuereinrichtung, wobei die Bezugsmarke eine vorgegebene der Bezugsmarke zugeordnete Stellung der Kurbelwelle kennzeichnet. Zur Codierung der Brennkraftmaschine ist die Bezugsmarke einer für die Brennkraftmaschine spezifischen Stellung der Kurbelwelle zugeordnet.

In der Offenlegungsschrift DE 10 2005 039 585 A1 wird ein Fahrberechtigungssystem mit einer elektronischen Wegfahrsperrfunktion beschrieben. Die beschriebene elektronischen Wegfahrsperrfunktion ist mit einem Kurbelwellensensor gekoppelt, wobei der Kurbelwellensensor über ein an der Kurbelwelle angeordnetes Geberrad die Stellung und/oder die Drehzahl der Kurbelwelle erfasst und an ein Motorsteuergerät überträgt, welches die elektronische Wegfahrsperrfunktion freigibt. Das Geberrad umfasst eine vorgegebene Anzahl von Zähnen, welche mittels einer Codierung am Umfang des Geberrads verteilt sind und ein codiertes Drehzahlsignal erzeugen, welches vom Kurbelwellensensor erfasst und vom Motorsteuergerät decodierbar ist, wobei das Motorsteuergerät die Wegfahrsperrfunktion nur nach einer erfolgreichen Decodierung des codierten Drehzahlsignals freigibt.

Aufgabe der Erfindung ist es, ein Fahrberechtigungssystem für einen Elektroantrieb anzugeben, welches eine mechatronische Anbindung einer elektronischen Wegfahrsperrfunktion an einen Elektroantrieb und damit einen erhöhten Diebstahlschutz ermöglicht.

Die Erfindung löst diese Aufgabe durch Bereitstellung eines Fahrberechtigungssystems für einen Elektroantrieb mit den Merkmalen des Patentanspruchs 1.

Vorteilhafte Ausführungsformen und Weiterbildungen der Erfindung sind in den abhängigen Ansprüchen angegeben.

Erfindungsgemäß sind zur Umsetzung einer elektronischen Wegfahrsperrfunktion Positionen und/oder Anzahl von aktiven Drehwinkelsensoren codierbar ausgeführt, wobei eine Auswerte- und Steuereinheit zur Ermittlung einer aktuellen Stellung eines beweglichen Elements eines Elektroantriebs mit einer vorgegebenen Anzahl von Erregerspulen die codierten Positionsinformationen der aktiven Drehwinkelsensoren decodiert. Dabei ist der Betrieb des Elektroantriebs nur nach der erfolgreichen Decodierung der Positionsinformationen möglich. Des Weiteren ermittelt die Auswerte- und Steuereinheit für den Betrieb des Elektroantriebs eine aktuelle Stellung des beweglichen Elements aus mehreren Positionsinformationen, die von einer vorgegebenen Anzahl von Drehwinkelsensoren zur Verfügung gestellt werden.

Die Anbindung der Funktion der Wegfahrsperre an ein schwer austauschbares Fahrzeugteil, wie hier an den Elektroantrieb, erschwert in vorteilhafter Weise den Austausch von Komponenten zur Umgehung der Wegfahrsperrfunktion erheblich. Die Anbindung erfolgt erfindungsgemäß über die antriebsindividuelle Ausführung der Drehwinkelsensorik zur Ermittelung der mechanischen Stellung des Drehwinkels des beweglichen Elements des Elektroantriebs, der notwendig ist, um einen kontaktfreien Elektroantrieb zu betreiben. Die antriebsindividuelle Ausführung der Drehwinkeisensorik wird in der Auswerte- und Steuereinheit des Fahrzeugs dekodiert, um den Elektroantrieb richtig ansteuern zu können. Somit ermöglicht die Erfindung die Realisierung einer effektiven Wegfahrsperrfunktion, so dass ein einfaches Austauschen des Steuergerätes zur Umgehung der elektronischen Wegfahrsperrfunktion nicht ausreichend ist. Ein weiterer Vorteil besteht darin, dass die Drehwinkelsensoren in der technischen Ausführung im Elektroantrieb des Fahrzeuges, von außen nur schwer zugänglich sind, und sich somit einer schnellen Manipulation entziehen.

In Ausgestaltung des erfindungsgemäßen Fahrberechtigungssystems ist die Anzahl der vorhandenen Positionen für die aktiven Drehwinkelsensoren größer als die Anzahl der aktiven Drehwinkelsensoren. Für eine eindeutige Bestimmung der Stellung des beweglichen Elements sind mindestens drei Drehwinkelsensoren notwendig, die an drei verschiedenen Positionen angeordnet werden. Werden nun mehr Positionen für die mögliche Anordnung von Drehwinkelsensoren zur Verfügung gestellt, so können die Drehwinkelsensoren für jeden Elektroantrieb individuell angeordnet werden. Die Auswerte- und Steuereinheit kann beispielsweise durch einen Decodieralgorithmus an die veränderten Positionsinformationen der Drehwinkelsensoren angepasst werden, um das bewegliche Element des Elektroantriebs in Bewegung zu versetzen. Eine falsche Auswertung der Positionsinformationen aufgrund einer fälschlich angenommenen Position der Drehwinkelsensoren, führt hier nicht zu einer Bewegung des beweglichen Elements des Elektroantriebs. Außer den Positionen der einzelnen Drehwinkelsensoren kann auch die Anzahl der aktiven Drehwinkelsensoren codiert bzw. variiert werden, deren Positionsinformationen zur Ermittlung der Stellung des beweglichen Elements ausgewertet werden. Zudem ist es möglich an jede der möglichen Positionen einen Drehwinkelsensor anzuordnen und mit der Auswerte- und Steuereinheit zu koppeln, so dass die Positionscodierung nicht sofort ersichtlich ist.

In weiterer Ausgestaltung des erfindungsgemäßen Fahrberechtigungssystems decodiert die Auswerte- und Steuereinheit die codierten Positionsinformationen der aktiven Drehwinkelsensoren mit einem Decodieralgorithmus, welcher von einem berechtigten Authentikationselement freigebbar und aktivierbar ist. Ein Freigabesignal für den Decodieralgorithmus in der Auswerte- und Steuereinheit wird beispielsweise von einem elektronischen Zündschloss nach einer erfolgreichen Authentikation erzeugt, wobei das elektronische Zündschloss zur Authentikation über eine Kommunikationsverbindung mit dem tragbaren Authentikationselement kommuniziert.

In weiterer Ausgestaltung des erfindungsgemäßen Fahrberechtigungssystems sind die Drehwinkelsensoren beispielsweise als Hallsensoren ausgeführt. Zudem weist der Rotor eine Rotorwelle auf, die mit einem Permanentmagneten verbunden ist. Die als Hallsensoren ausgeführten Drehwinkelsensoren erfassen nun die Positionsinformationen, aus denen die Lage des Permanentmagneten ermittelt werden kann.

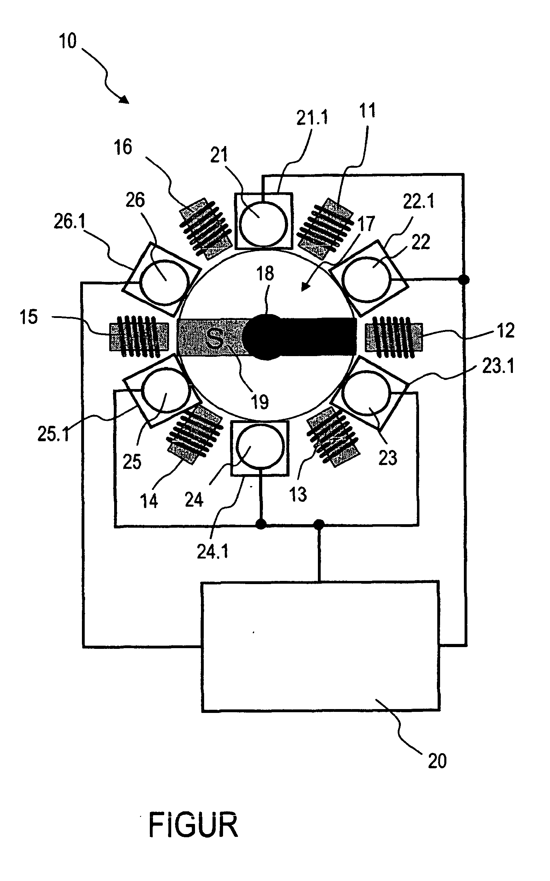

Eine vorteilhafte Ausführungsform der Erfindung ist in der Zeichnung dargestellt und wird nachfolgend beschrieben. Die einzige Figur zeigt ein schematisches Blockschaltbild eines Ausführungsbeispiels eines erfindungsgemäßen Fahrberechtigungssystems für einen Elektroantrieb.

Wie aus der Figur ersichtlich ist, umfasst ein Elektroantrieb 10 im dargestellten Ausführungsbeispiel sechs Erregerspulen 11, 12, 13, 14, 15, 16 und ein drehbewegliches Element 17, das als Rotor mit einer Rotorwelle 18 ausgeführt ist, die mit einem Permanentmagneten 19 verbunden ist. Zwischen den Erregerspulen 11, 12, 13, 14, 15, 16 sind sechs mögliche Positionen 21.1, 22.1, 23.1, 24.1, 25.1, 26.1 zur Anordnung von Drehwinkelsensoren 21, 22, 23, 24, 25, 26 dargestellt, wobei eine Auswerte- und Steuereinheit 20 für den Betrieb des Elektroantriebs 10 eine aktuelle Stellung des beweglichen Elements 17 aus mehreren Positionsinformationen ermittelt, die von einer vorgegebenen Anzahl von Drehwinkelsensoren 21, 22, 23, 24, 25, 26 zur Verfügung gestellt werden. Zur Umsetzung einer elektronischen Wegfahrsperrfunktion sind die Positionen 21.1, 22.1, 23.1, 24.1, 25.1, 26.1 und/oder Anzahl der aktiven Drehwinkelsensoren 21, 22, 23, 24, 25, 26 codierbar ausgeführt, wobei die Auswerte- und Steuereinheit 20 zur Ermittlung der aktuellen Stellung des beweglichen Elements 17 die codierten Positionsinformationen der aktiven Drehwinkelsensoren 21, 22, 23, 24, 25, 26 decodiert. Hierbei ist der Betrieb des Elektroantriebs 10 nur nach der erfolgreichen Decodierung der Positionsinformationen möglich. Um eine entsprechende Codierung vornehmen zu können, ist die Anzahl der vorhandenen Positionen für die aktiven Drehwinkelsensoren 21, 22, 23, 24, 25, 26 größer als die Anzahl der aktiven Drehwinkelsensoren 21, 22, 23, 24, 25, 26 und die Auswerte- und Steuereinheit 20 decodiert die codierten Positionsinformationen der aktiven Drehwinkelsensoren 21, 22, 23, 24, 25, 26 mit einem Decodieralgorithmus, welcher von einem berechtigten Authentikationselement freigegeben und aktiviert wird. Das zugehörige Freigabesignal für den Decodieralgorithmus in der Auswerte- und Steuereinheit 20 wird beispielsweise von einem nicht dargestellten elektronischen Zündschloss nach einer erfolgreichen Authentikation erzeugt, wobei das elektronische Zündschloss zur Authentikation über eine Kommunikationsverbindung mit dem tragbaren Authentikationselement kommuniziert.

Zudem sind im dargestellten Ausführungsbeispiel des Fahrberechtigungssystems die Drehwinkelsensoren 21, 22, 23, 24, 25, 26 als Hallsensoren ausgeführt, welche die Positionsinformationen erfassen, aus denen die Lage des Permanentmagneten 19 des Rotors 17 ermittelt werden kann.

Die erfindungsgemäße Anbindung der Wegfahrsperrfunktion an ein schwer austauschbares Fahrzeugteil, wie in diesem Fall an den Elektroantrieb, erschwert den Austausch zur Umgehung der Wegfahrsperrfunktion erheblich. Die Anbindung erfolgt über die antriebsindividuelle Ausführung der Drehwinkelsensoren 21, 22, 23, 24, 25, 26 zur Ermittelung der mechanischen Stellung des Drehwinkels des Rotors 17, welcher notwendig ist, um den dargestellten als kontaktfreien Elektromotor ausgeführten Elektronantrieb 10 zu betreiben. Die antriebsindividuelle Ausführung der Drehwinkelsensoren 21, 22, 23, 24, 25, 26 wird in der Auswerte- und Steuereinheit 20 dekodiert, damit der Elektroantrieb 10 richtig angesteuert werden kann.

Das in der Figur dargestellte Ausführungsbeispiel beschreibt einen so genannten Innenläufer, bei dem das als Rotor 17 ausgeführte bewegliche Element innen liegt. Um den Elektroantrieb 10 in Betrieb zu nehmen, müssen zu den richtigen Zeitpunkten in Abhängigkeit von der Drehzahl die Erregerspulen 11, 12, 13, 14, 15, 16 richtig gepolt werden. In der Figur korrespondiert eine erste Erregerspule 11 als Spule A mit einer ersten Phase 1 und eine zweite Erregerspule 14 korrespondiert als Spule B mit der ersten Phase 1. Eine dritte Erregerspule 12 korrespondiert als Spule A mit einer zweiten Phase 2 und eine vierte Erregerspule 15 korrespondiert als Spule B mit der zweiten Phase 2. Eine fünfte Erregerspule 13 korrespondiert als Spule A mit einer dritten Phase 3 und eine sechste Erregerspule 16 korrespondiert als Spule B mit der dritten Phase 3. Die Umschaltung wird von der Auswerte- und Steuereinheit 20 elektronisch geregelt. Dazu wird die Stellung des Rotors 17 über die Drehwinkelsensoren 21, 22, 23, 24, 25, 26 ermittelt. Über den Halleffekt und den Permanentmagneten 19 des Rotors 17 liefern die aktivierten Drehwinkelsensoren 21, 22, 23, 24, 25, 26 Positionsinformationen, die in der Auswerte- und Steuereinheit 20 ausgewertet werden, und über welche die Erregerspulen 11, 12, 13, 14, 15, 16 geeignet angesteuert werden können, so dass es zur Drehbewegung des Rotors 17 kommt.

Für eine eindeutige Positionsbestimmung sind in dem dargestellten Elektroantrieb 10 mindestens drei Drehwinkelsensoren 21, 22, 23, 24, 25, 26 erforderlich. Zur Ausführung der Decodierung können beispielsweise nur die drei Drehwinkelsensoren 21, 22, 23 im Eiektroantrieb 10 verbaut werden, welche an den Positionen 21.1, 22.1, 23.1 angeordnet sind, um die genaue Stellung des Rotors 17 zu ermitteln. Die drei Drehwinkelsensoren 21, 22, 23 können für jeden Elektroantrieb 10 nun individuell angeordnet werden und nicht an den Positionen 21.1, 22.1 und 22.3, sondern beispielsweise an den Positionen 21.1, 24.1 und 25.1 usw. angeordnet werden. Eine entsprechende elektronische Steuerung in der Auswerte- und Steuereinheit 20 muss dann an die veränderten Positionsinformationen angepasst werden, um den Rotor 17 in die Drehbewegung zu versetzen. Eine falsche Auswertung der Drehwinkelsignale, aufgrund von fälschlich angenommenen Positionen 21.1, 22.1, 23.1, 24.1, 25.1, 26.1 der verbauten Drehwinkelsensoren 21, 22, 23, 24, 25, 26, führt dann nicht zu einer Drehbewegung des Rotors 17. Zur Verbesserung der Codierung kann, wie im dargestellten Ausführungsbeispiel, an jeder möglichen Position 21.1, 22.1, 23.1, 24.1, 25.1, 26.1 ein Drehwinkelsensor 21, 22, 23, 24, 25, 26 angeordnet werden, von denen von der Auswerte- und Steuereinheit 20 jeweils nur drei aktiviert werden, um die aktuelle Stellung des Rotors 17 zu ermitteln. Durch diese Ausführungsform können die zur Ermittlung der Rotorstellung verwendeten Positionen 21.1, 22.1, 23.1, 24.1, 25.1, 26.1 während des Betriebs verändert werden.

Somit können die beschriebenen Ausführungsformen der Erfindung für eine effektive Wegfahrsperrfunktion, und damit für eine Diebstahlsicherungseinrichtung ausgenutzt werden. Von Vorteil ist dabei, dass die Drehwinkelsensoren 21, 22, 23, 24, 25, 26 in der technischen Ausführung im Elektroantrieb 10 des Fahrzeuges, von außen schwer zugänglich sind, und sich somit einer schnellen Manipulation entziehen. Die in diesem Ausführungsbeispiel verwendeten sechs Drehwinkelsensoren 21, 22, 23, 24, 25, 26 bzw. die sechs möglichen Sensorpositionen 21.1, 22.1, 23.1, 24.1, 25.1, 26.1 erlauben natürlich nur eine beschränkte Anzahl von Kombinationen für individualisierte Elektroantriebe 10. Bei weiteren nicht dargestellten Ausführungsformen können mehr als sechs Positionen bzw. eine andere Anzahl von Drehwinkelsensoren verwendet werden, um erweiterte Kodierungsmöglichkeiten der Positionsinformationen zu erhalten.

## Patentansprüche

1. Fahrberechtigungssystem für einen Elektroantrieb (10), welcher eine vorgegebene Anzahl von Erregerspulen (11, 12, 13, 14, 15, 16) und ein drehbewegliches Element (17) umfasst, wobei eine Auswerte- und Steuereinheit (20) für den Betrieb des Elektroantriebs (10) eine aktuelle Stellung des beweglichen Elements (17) aus mehreren Positionsinformationen ermittelt, die von einer vorgegebenen Anzahl von Drehwinkelsensoren (21, 22, 23, 24, 25, 26) zur Verfügung stellbar sind,
**dadurch gekennzeichnet,**
**dass** zur Umsetzung einer elektronischen Wegfahrsperrfunktion Positionen (21.1, 22.1, 23.1, 24.1, 25.1, 26.1) und/oder Anzahl der aktiven Drehwinkelsensoren (21, 22, 23, 24, 25, 26) codierbar ausgeführt sind, wobei die Auswerte- und Steuereinheit (20) zur Ermittlung der aktuellen Stellung des beweglichen Elements (17) die codierten Positionsinformationen der aktiven Drehwinkelsensoren (21, 22, 23, 24, 25, 26) decodiert, wobei der Betrieb des Elektroantriebs (10) nur nach der erfolgreichen Decodierung der Positionsinformationen möglich ist.

2. Fahrberechtigungssystem nach Anspruch 1,
**dadurch gekennzeichnet,**
**dass** die Anzahl der vorhandenen Positionen (21.1, 22.1, 23.1, 24.1, 25.1, 26.1) für die aktiven Drehwinkelsensoren (21, 22, 23, 24, 25, 26) größer als die Anzahl der aktiven Drehwinkelsensoren (21, 22, 23, 24, 25, 26) ist.

3. Fahrberechtigungssystem nach Anspruch 1 oder 2,
**dadurch gekennzeichnet,**
**dass** die Auswerte- und Steuereinheit (20) die codierten Positionsinformationen der aktiven Drehwinkelsensoren (21, 22, 23, 24, 25, 26) mit einem Decodieralgorithmus decodiert, welcher von einem berechtigten Authentikationselement freigebbar und aktivierbar ist.

4. Fahrberechtigungssystem nach Anspruch 3,
**dadurch gekennzeichnet,**
**dass** ein Freigabesignal für den Decodieralgorithmus in der Auswerte- und Steuereinheit (20) von einem elektronischen Zündschloss nach einer erfolgreichen Authentikation erzeugbar ist, wobei das elektronische Zündschloss zur Authentikation über eine Kommunikationsverbindung mit dem tragbaren Authentikationselement kommuniziert.

5. Fahrberechtigungssystem nach einem der Ansprüche 1 bis 4,
**dadurch gekennzeichnet,**
**dass** die Drehwinkelsensoren (21, 22, 23, 24, 25, 26) als Hallsensoren ausgeführt sind.

6. Fahrberechtigungssystem nach einem der Ansprüche 1 bis 4,
**dadurch gekennzeichnet,**
**dass** der Rotor (17) eine Rotorwelle (18) aufweist, die mit einem Permanentmagneten (19) verbunden ist.

7. Fahrberechtigungssystem nach Anspruch 5 oder 6,
**dadurch gekennzeichnet,**
**dass** die als Hallsensoren ausgeführten Drehwinkelsensoren (21, 22, 23, 24, 25, 26) die Positionsinformationen erfassen, aus denen die Lage des Permanentmagneten (19) ermittelbar ist.

## Claims

1. Drive authorisation system for an electric drive (10) which comprises a preset number of exciter coils (11, 12, 13, 14, 15, 16) and an element (17) capable of rotary movement, wherein an evaluation and control unit (20) determines for the operation of the electric drive (10) a current position of the movable element (7) from a plurality of position data which can be made available by a preset number of rotational angle sensors (21, 22, 23, 24, 25, 26),
**characterised in that**
for the conversion of an electronic immobiliser function, positions (21.1, 22.1, 23.1, 24.1, 25.1, 26.1) and/or a number of the active rotational angle sensors (21, 22, 23, 24, 25, 26) are designed to be encodable, wherein the evaluation and control unit (20) decodes the position data of the active rotational angle sensors (21, 22, 23, 24, 25, 26) to determine the current position of the movable element (7), the operation of the electric drive (10) being possible only after the successful decoding of the position data.

2. Drive authorisation system according to claim 1,
**characterised in that**
the number of the existing positions (21.1, 22.1, 23.1, 24.1, 25.1, 26.1) for the active rotational angle sensors (21, 22, 23, 24, 25, 26) is greater than the number of the active rotational angle sensors (21, 22, 23, 24, 25, 26).

3. Drive authorisation system according to claim 1 or 2,
**characterised in that**
the evaluation and control unit (20) decodes the encoded position data for the active rotational angle sensors (21, 22, 23, 24, 25, 26) using a decoding algorithm which can be enabled and activated by an authorised authentication element.

4. Drive authorisation system according to claim 3,
**characterised in that**
an enabling signal for the decoding algorithm in the evaluation and control unit (20) can be generated by an electronic ignition lock following a successful authentication, the an electronic ignition lock communicating with the portable authentication element via a communication link for authentication.

5. Drive authorisation system according to any of claims 1 to 4,
**characterised in that**
the rotational angle sensors (21, 22, 23, 24, 25, 26) are designed as Hall sensors.

6. Drive authorisation system according to any of claims 1 to 4,
**characterised in that**
the rotor (17) comprises a rotor shaft (18) which is connected to a permanent magnet (19).

7. Drive authorisation system according to claim 5 or 6,
**characterised in that**
the rotational angle sensors (21, 22, 23, 24, 25, 26) designed as Hall sensors detect the position data from which the position of the permanent magnet (19) can be determined.

## Revendications

1. Système d'autorisation de conduite pour un entraînement électrique (10) qui comprend un nombre défini de bobines d'excitation (11, 12, 13, 14, 15, 16) et un élément (17) mobile en rotation, une unité de commande et d'évaluation (20) pour le fonctionnement de l'entraînement électrique (10) déterminant une position réelle de l'élément mobile (17) à partir de plusieurs informations de position qui peuvent être mises à disposition par un nombre défini de capteurs d'angle de rotation (21, 22, 23, 24, 25, 26), **caractérisé en ce que** pour la mise en oeuvre d'une fonction électronique d'anti-démarrage des positions (21.1, 22.1, 23.1, 24.1, 25.1, 26.1) et/ou un nombre de capteurs d'angle de rotation (21, (22, 23, 24, 25, 26) sont conçus pour être codés, une unité de commande et d'évaluation (20) destinée à la détermination de la position réelle de l'élément mobile (17) décodant les informations de position codées des capteurs d'angle de rotation (21, 22, 23, 24, 25, 26), le fonctionnement de l'entraînement électrique (10) étant possible uniquement après le décodage réussi des informations de position.

2. Système d'autorisation de conduite selon la revendication 1, **caractérisé en ce que** le nombre de positions existantes (21.1., 22.1, 23. 1, 24.1, 25.1., 26.1) pour les capteurs d'angle de rotation (21, 22, 23, 24, 25, 26) est supérieur au nombre de capteurs d'angle de rotation actifs (21, 22, 23, 24, 25, 26).

3. Système d'autorisation de conduite selon la revendication 1 ou 2, **caractérisé en ce que** l'unité de commande et d'évaluation (20) décode les informations de position des capteurs d'angle de rotation actifs (21, 22, 23, 24, 25, 26) à l'aide d'un algorithme de décodage qui peut être activé et autorisé par un élément d'authentification autorisé.

4. Système d'autorisation de conduite selon la revendication 3, **caractérisé en ce qu'**un signal d'autorisation pour l'algorithme de décodage dans l'unité de commande et d'évaluation (20) peut être généré par une serrure de contact électronique après une authentification réussie, la serrure de contact électronique pour l'authentification communiquant par l'intermédiaire d'une liaison de communication avec l'élément d'authentification portable.

5. Système d'autorisation de conduite selon l'une quelconque des revendications 1 à 4, **caractérisé en ce que** les capteurs d'angle de rotation (21, 22, 23, 24, 25, 26), sont conçus comme des capteurs à effet Hall.

6. Système d'autorisation de conduite selon l'une quelconque des revendications 1 à 4, **caractérisé en ce que** le rotor (17) présente un arbre (18) de rotor qui est relié à un aimant permanent (19).

7. Système d'autorisation de conduite selon la revendication 5 ou 6, **caractérisé en ce que** les capteurs d'angle de rotation (21, 22, 23, 24, 25, 26) conçus comme des capteurs à effet Hall détectent les informations de position à partir desquelles la position de l'aimant permanent peut être déterminée.
